# EUROPEAN PATENT APPLICATION

(11) **EP 1 839 831 A1**
(43) Date of publication of application: **03.10.2007**
(21) Application number: 06783005.9
(22) Date of filing: 24.08.2006
(51) Int. Cl.: B29B 11/16, B29K 101/00

(54) **THIN-LAYER REINFORCING MATERIAL**

(30) Priority: 25.08.2005 JP 2005243969
(71) Applicant: Maruhachi Corporation, Sakai-shi, Fujui 910-0276 (JP); Maruhachi E.X.P.T. Corporation, Fukui-shi, Fukui 910-0005 (JP)
(72) Inventor: SUGAHARA, Masataka, c/o Maruhachi Corporation, Sakai-shi, Fukui 910-0276 (JP); SUGAHARA, Toshihide, c/o Maruhachi E.X.P.T. Corporation, Fukui 910-0005 (JP)
(74) Representative: Loveless, Ian Mark
(86) International application number: PCT/JP2006/316651
(87) International publication number: WO 2007/023922

(57) **Abstract**

The present invention provides a thin-layer reinforcement member which enhances the mechanical characteristics, such as tensile strength and tear propagation strength, of a to-be-reinforced base substance that is thin, lightweight, and flexible, while maintaining the characteristics of the base substance, such as the thickness, weight, and flexibility. A thin-layer reinforcement member (10) of the present invention is a thin-layer reinforcement tape comprising a tape-shaped substance obtained by impregnating reinforcement fiber string bundles 1 which are extended and broadened to have a width per 1000 strings being 1.3mm or more, with an adhesive resin (11), and the mechanical characteristics of a base substance (20) as a reinforcement target is reinforced by bonding the reinforcement tape (10) to the to-be-reinforced base substance (20).

## Description

### TECHNICAL FIELD

The present invention relates to a thin-layer reinforcement member for reinforcing the mechanical characteristics of a base substance to be reinforced, which is lightweight, thin, and has flexibility.

### BACKGROUND ART

Conventionally, a tape that is obtained by impregnating carbon fibers or the like with a thermosetting resin or a thermoplastic resin serving as a matrix, has been broadly used as an intermediate material up to obtaining a composite material (refer to Patent Document 1).

Further, a tape that is obtained by impregnating reinforcement fibers with an uncured thermosetting resin, which is wound around or bonded to a main part of a building structure such as a column to obtain a reinforced resultant, has also been practically used.

Furthermore, as an intermediate material up to obtaining a composite material, a ultrathin fiber reinforcement member that is obtained by spreading reinforcement fibers has also been disclosed (refer to Patent Document 2).

Products fabricated by using such intermediate substance of the ordinary fiber reinforcement polymer composite material are rigid in spite of lightweight, and have high mechanical characteristics, and recently, are developed to various applications represented by parts of airplanes.
Patent Document 1: Japanese Published Patent Application No. 2003-165851
Patent Document 2: brochure of International Publication No.2005/002819

### DISCLOSURE OF THE INVENTION

### PROBLEMS TO BE SOLVED BY THE INVENTION

Although the conventional fiber reinforcement polymer composite material can provide high mechanical characteristics as described above, it is difficult to combine thinness and flexibility with the high mechanical characteristics. Accordingly, the intermediate substance of the conventional composite material cannot be used as a reinforcement member for reinforcing the mechanical characteristics of a thin base substance that is lightweight and flexible, while maintaining the characteristics thereof.

As an example of a base substance that is required to have high mechanical characteristics such as tear propagation strength while maintaining lightweight, thinness, flexibility and the like, there is a sail of a sail boat. While woven canvas has existed as a material suited to a sail of a sail boat, since it is necessary to derive a maximum speed (knot) under various conditions of winds in the case of a sail boat for competition, the sail is required to have, in addition to its shape, lightweight, high tear propagation strength, sufficient flexibility, and sufficient anti-folding property. When such sail is fabricated using the tape of the conventional intermediate member for composite material, the thickness of the sail increases and the weight thereof also increases, whereby flexibility and anti-folding property are degraded. Further, since more reinforcement fibers than required are often used, the cost is increased by that much.

While, as described above, there has conventionally been a tape which is wound around or bonded to a main part of a building structure to reinforce the building structure against earthquakes, this tape is inappropriate to be used as a reinforcement member for reinforcing the mechanical characteristics of a lightweight and flexible thin base substance while maintaining the characteristics thereof, in respect that the reinforcement target of the tape is a rigid body such as a column, and that the tape is aimed at reinforcement against earthquakes.

Further, while a ultrathin fiber reinforcement member which is obtained by extending reinforcement fibers has conventionally been introduced, an idea of using this as a reinforcement member for reinforcing mechanical characteristics of a lightweight and flexible thin base substance while maintaining the characteristics thereof is not found at all in literatures.

The present invention is made to solve the above-described problems and has for its object to provide a thin-layer reinforcement member for enhancing the mechanical characteristics of a to-be-reinforced base substance which is thin, lightweight, and flexible, while maintaining the characteristics thereof such as the thickness, weight, and flexibility.

### MEASURES TO SOLVE THE PROBLEMS

In order to solve the above-mentioned problems, there is provided a thin-layer reinforcement member which is bonded to a to-be-reinforced base substance to reinforce the mechanical characteristics of the base substance, and the reinforcement member comprises a tape-shaped substance which is obtained by impregnating reinforcement fiber string bundles that are extended and broadened to have a width per 1000 strings being 1.3mm or more, with an adhesive resin.

Therefore, it is possible to enhance the mechanical characteristics of the to-be-reinforced base substance, without significantly changing the characteristics of the base substance such as the weight and the thickness.

Further, according to the thin-layer reinforcement member of the present invention, the to-be-reinforced base substance is lightweight, thin, and has flexibility.

Therefore, it is possible to enhance the mechanical characteristics of the to-be-reinforced base substance while maintaining the characteristics of the base substance that is lightweight, thin, and flexible.

Further, according to the thin-layer reinforcement member of the present invention, the to-be-reinforced base substance is a sheet-shaped substance.

Therefore, it is possible to enhance the mechanical characteristics of the to-be-reinforced base substance while maintaining the characteristics of the base substance that is lightweight, thin, and flexible.

Further, according to the thin-layer reinforcement member of the present invention, the adhesive resin is a hot melt type resin.

Therefore, the thin-layer reinforcement member can be bonded to the to-be-reinforced base substance by thermal compression.

Further, according to the thin-layer reinforcement member of the present invention, an exfoliate tape is bonded to at least one side of the thin-layer reinforcement member.

Therefore, the thin-layer reinforcement member can be rolled up when it is stored, whereby the storage method is facilitated. Further, when the thin-layer reinforcement member is bonded to the to-be-reinforced base substance, the processing is facilitated.

Further, according to the thin-layer reinforcement member of the present invention, the reinforcement fibers are carbon fibers.

Therefore, the mechanical characteristics of the thin-layer reinforcement member can be further enhanced by the high specific strength and high specific modulus of the carbon fibers.

Further, according to the thin-layer reinforcement member of the present invention, the layer comprising the reinforcement fiber string bundles has the reinforcement fibers oriented in a monoaxial direction.

Therefore, the mechanical characteristics of the to-be-reinforced base substance in the axial direction where the base substance is oriented can be enhanced without significantly changing the characteristics of the base substance such as the weight and the thickness. Further, the direction in which the mechanical characteristics of the to-be-reinforced base substance are reinforced can be arbitrarily selected by appropriately selecting the bonding arrangement of the thin-layer reinforcement member to the base substance.

Further, according to the thin-layer reinforcement member of the present invention, the thin-layer reinforcement member is bonded to the to-be-reinforced base substance so that the reinforcement fibers are oriented in one direction.

Therefore, it is possible to enhance the mechanical characteristics of the to-be-reinforced base substance in a specific direction, without significantly changing the characteristics of the base substance such as the weight and the thickness.

Further, according to the thin-layer reinforcement member of the present invention, the thin-layer reinforcement member is overlappingly bonded to the base substance so that the reinforcement fibers are oriented in different directions.

Therefore, it is possible to enhance the mechanical characteristics of the to-be-reinforced base substance in plural directions, without significantly changing the characteristics of the base substance such as the weight and the thickness.

Further, according to the thin-layer reinforcement member of the present invention, a main component of the to-be-reinforced base substance is a biaxial stretching film.

Therefore, it is possible to easily provide a reinforced substance which is airtight, lightweight, thin, and flexible by utilizing the toughness of the biaxial stretching film. This reinforced substance is especially suitable as a material for a sail.

Further, according to the thin-layer reinforcement member of the present invention, a printed film is bonded to one side of the thin-layer reinforcement member.

Therefore, the extended and broadened reinforcement fiber plane of the thin-layer reinforcement member can be protected, and the effect of design can be given to the thin-layer reinforcement member.

### EFFECTS OF THE INVENTION

According to the present invention, since a thin-layer reinforcement member comprises a tape-shaped substance which is obtained by impregnating reinforcement fiber string bundles which are extended and broadened to have a width per 1000 strings being 1.3mm or more, with an adhesive resin, it is possible to provide a reinforcement member having high mechanical characteristics while it is lightweight, thin, and flexible. Further, when the thin-layer reinforcement member is bonded to a to-be-reinforced base substance, the mechanical characteristics of the base substance can be enhanced without significantly changing the characteristics of the base substance such as the thickness, weight, and flexibility.

Further, when the adhesive resin for the thin-layer reinforcement member is a hot melt type resin, the reinforcement member can be bonded to the to-be-reinforced base substance by thermal compression bonding, whereby the bonding operation can be significantly simplified.

Furthermore, when the reinforcement fibers are carbon fibers, the mechanical characteristics of the thin-layer reinforcement member can be further enhanced, whereby the mechanical characteristics of the to-be-reinforced base substance can be further enhanced.

Furthermore, since an exfoliate tape is bonded to at least one side of the thin-layer reinforcement member, the thin-layer reinforcement member can be rolled up when it is stored, the storage method is facilitated, and further, the work efficiency is enhanced when the reinforcement member is bonded to the to-be-reinforced base substance.

Furthermore, when a printed film is bonded to one side of the thin-layer reinforcement member, the reinforcement fibers of the reinforcement member can be protected, and the design effect can be obtained.

### BRIEF DESCRIPTION OF THE DRAWING

Figures 1(a) and 1(b) are a plane view and a cross-sectional view illustrating monoaxially-orientated extended and broadened reinforcement fibers according to a first embodiment of the present invention.
Figure 2 is a diagram illustrating a monoaxially oriented reinforcement tape according to the first embodiment of the present invention.
Figure 3 is a diagram for explaining a method of bonding a tape-shaped resin to extended and broadened reinforcement fibers, and impregnating the fibers with the resin by pressurization and heating, according to the first embodiment of the present invention.
Figure 4 is a diagram illustrating another example of monoaxially oriented extended and broadened reinforcement fibers according to the first embodiment of the present invention.
Figure 5 is a diagram illustrating the state where an exfoliate tape is bonded to the reinforcement tape according to the first embodiment of the present invention.
Figure 6 is a diagram illustrating the state where a printed film is bonded to the reinforcement tape according to the first embodiment of the present invention.
Figures 7(a)-7(c) are diagrams illustrating examples of the states where the reinforcement tape according to the first embodiment of the present invention is bonded to a to-be-reinforced base substance, wherein figure 7(a) shows an example where the tape is bonded in a monoaxial direction, figure 7(b) shows an example where the tape is bonded in biaxial directions, and figure 7(c) shows an example where tape is bonded to a part.
Figure 8 is a diagram illustrating the process steps of fabricating the reinforcement tape according to the first embodiment.
Figure 9 is a schematic diagram illustrating a cross section of an exfoliate film to be bonded to the reinforcement tape during the reinforcement tape fabrication process according to the first embodiment.
Figure 10 is a schematic diagram illustrating a cross section of the reinforcement tape obtained in the reinforcement tape fabrication process according to the first embodiment.
Figure 11(a)-11(c) are diagrams illustrating, in stages, the manner of successively bonding the reinforcement tape to a sail of a sail boat, according to the first embodiment.

### DESCRIPTION OF THE REFERENCE NUMERALS

1...expanded and broadened monoaxially-oriented reinforcement fibers
2a,2b...exfoliate film supply unit
3...a pair of upper and lower rolls
4,6...heater
5a,5b,7a,7b...pressurization unit
8...winder
9...wind-up roll
10...reinforcement tape
11...resin
12...reinforcement fibers
13...exfoliate film
13a...exfoliate layer
13b...film
14...printed film
15...exfoliate film to which a resin is applied
16 ... reinforcement sheet
20...to-be-reinforced base substance

### BEST MODE TO EXECUTE THE INVENTION

### (Embodiment 1)

A thin-layer reinforcement member according to a first embodiment of the present invention will be described.

The thin-layer reinforcement member comprises a tape-shaped material which is obtained by impregnating reinforcement fiber string bundles that are extended and broadened to have a width per 1000 strings being 1.3mm or more, with an adhesive resin.

By bonding the thin-layer reinforcement member to a base substance as a reinforcement target, it is possible to enhance the mechanical characteristics of the base substance. The mechanical characteristics here are the tensile strength and the tear propagation strength.

The to-be-reinforced base substance, to which the thin-layer reinforcement member of this first embodiment is bonded, is lightweight and thin, and has flexibility. A typical example of the to-be-reinforced base substance is a sail of a sail boat. Further, other examples of the to-be-reinforced base substance include parachute, tent, balloon, architectural film member, sheet for casing of portable electric/information equipment, sheet for bags, thin-tube-shaped pole, and the like.

While the characteristics of the to-be-reinforced base substance are lightweight (weight per unit area), thinness (thickness), and flexibility (bending rigidity per unit width), these are desired to be 0.2g/cm² or less, 2mm or less, and 1.3Ncm²/cm (N: Newton) or less, respectively.

Hereinafter, the thin-layer reinforcement member (hereinafter referred to simply as "reinforcement member" or "reinforcement tape") of the present invention will be described.

The reinforcement tape of the present invention is obtained by impregnating reinforcement fiber string bundles which are extended and broadened to have a width per 1000 strings being 1.3mm or more, with an adhesive resin. Thereby, the thickness of the reinforcement tape is reduced while maintaining the reinforcement effect thereof, and further, the degree of weight increase is also reduced.

A typical example of the reinforcement fiber to be extended and broadened is carbon fiber. Since the carbon fiber has a high specific modulus and a high specific tensile strength, it is particularly superior in enhancing the mechanical characteristics of the reinforcement tape efficiently. Other examples of the reinforcement fiber include fibers having high dynamic properties, such as glass fiber, para-aramid fiber, wholly aromatic polyester fiber, ultrahigh molecular weight polyethylene fiber, and polybenzoxazole fiber. For example, the ultrahigh molecular weight polyethylene fiber is suitable for reinforcing a base substance for sail in view of its lightweight property, weather resistance, and anti-folding property.

As a method for extending and broadening the reinforcement fibers, preferably, reinforcement fiber bundles that are substantially not twisted are driven to run under their relaxed conditions, and a rectified airflow is sprayed substantially perpendicularly to the suspended reinforcement fiber bundles to extend and broaden the fiber bundles. The width of the fiber bundles to be broadened is increased by increasing the degree of suspension of the suspended fiber bundles or by increasing the flow rate of the air to be sprayed. However, it is noted that, if the fiber bundles are broadened too much, the uniformity of distribution of the fibers in the width direction is deteriorated. In order to achieve the purpose of the reinforcement tape, i.e., reducing the thickness of the to-be-reinforced base substance while maintaining the effect of enhancing the mechanical characteristics of the base substance, it is necessary to increase the width of a bundle of 1000 reinforcement fiber strings up to 1.3mm or more.

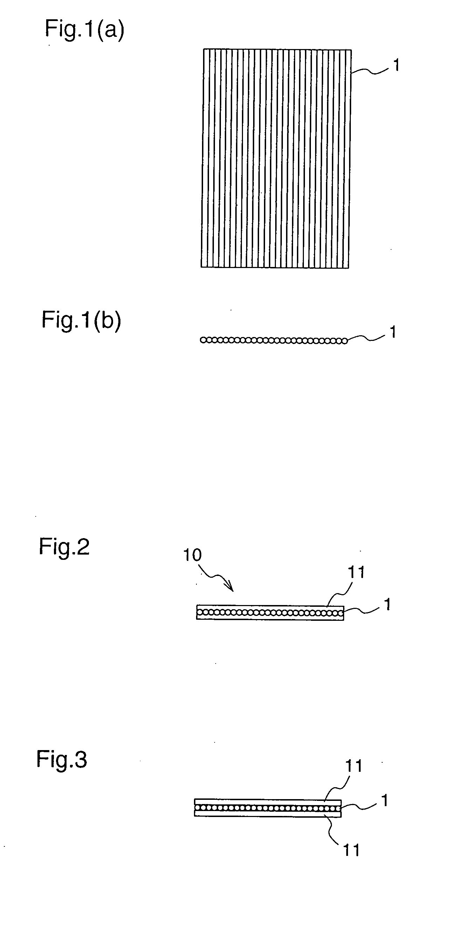

A typical orientation pattern of the reinforcement fibers 1 that are extended and broadened as mentioned above is a monoaxial orientation as shown in figure 1.

The extended and broadened reinforcement fibers 1 that are monoaxially oriented are impregnated with an adhesive resin (hereinafter referred to simply as "resin") 11, thereby obtaining a thin-layer reinforcement member having adhesion property (hereinafter referred to as "reinforcement tape") 10.

Although the resin 11 that impregnates the reinforcement tape 10 is not particularly restricted, a solventless type resin is preferable because a resin including excessive solvent or moisture takes troubles upon bonding. Particularly when the reinforcement tape 10 after being impregnated with the resin 11 needs sufficient flexibility and anti-folding property, the resin 11 is desired to be a hot melt type resin.

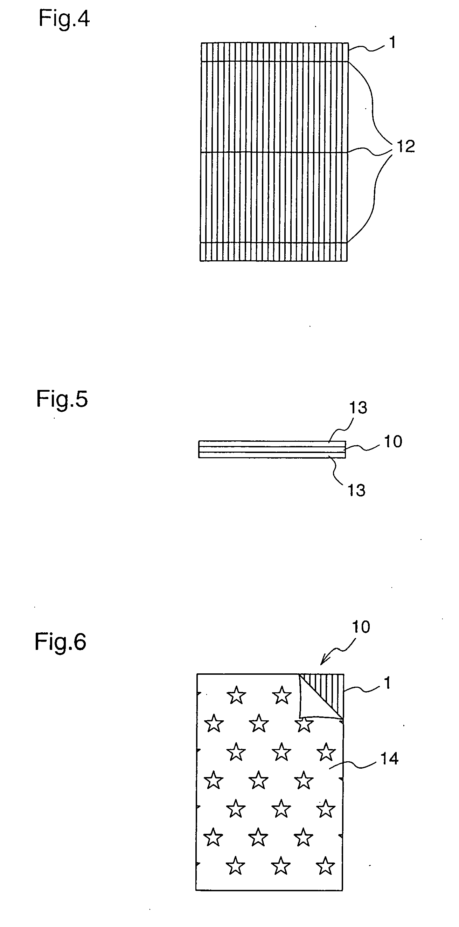

Further, as a method for impregnating the extended and broadened reinforcement fibers 1 with the resin 11, a method of applying the resin 11 to the extended and broadened reinforcement fibers 1 is considered. Alternatively, there is considered a method of bonding the tape-shaped resin 11 to the both sides or one side of the extended and broadened reinforcement fibers 1 as shown in figure 3, and then impregnating the fibers 1 with the resin 11 by pressurization and heating. In this first embodiment, since the reinforcement fibers to be impregnated with the resin 11 are extended and broadened, the reinforcement fibers are easily impregnated with the resin 11. However, since it is difficult to keep the orientation of the extended and broadened fibers 1, in order to prevent deviation in the orientation of the extended and broadened reinforcement fibers when impregnating the fibers with the resin 11, a few reinforcement fibers 12 may be disposed in the direction perpendicular to the orientation axis of the extended and broadened reinforcement fibers 1 as shown in figure 4.

Further, although the amount of the resin that impregnates the extended and broadened reinforcement fibers should be enough to ensure a sufficient bonding strength when the reinforcement tape 10 is bonded to a tape-shaped substance, this amount is desired to be as small as possible to keep the lightweight property of the reinforcement tape 10, and practically, it is preferably to be 80g/m² or less.

Further, it is ideal that the extended and broadened reinforcement fibers 1 of the fabricated reinforcement tape 10 are impregnated with the resin 11, and particularly, it is desired that all the expanded and broadened reinforcement fibers 1 are buried in the resin 11 as shown in figure 2. Thereby, the reinforcement efficiency of the extended and broadened reinforcement fibers is highly achieved, and the bonding strength to the to-be-reinforced base substance (described later) is also increased, whereby-damages to the reinforcement fibers due to transverse pressure load or shocking load from the outside can be reduced. However, it is not necessary that all the extended and broadened reinforcement fibers are buried in the resin, so long as the resin exists on at least the both sides of the extended and broadened reinforcement fibers, and a greater part of the fibers is impregnated with the resin.

As shown in figure 5, an exfoliate tape 13 having an exfoliate effect is bonded to both sides or one side of the reinforcement tape 10 that is fabricated as described above. Thereby, the reinforcement tape 10 can be stored in its rolled-up state. Further, when the reinforcement tape 10 is bonded to the to-be-reinforced base substance, the reinforcement tape 10 can be smoothly pulled out and bonded, whereby the working efficiency is enhanced.

Further, a film 14 may be previously bonded to one side of the reinforcement tape 10 as shown in figure 6. Thereby, the reinforcement fibers of the reinforcement tape 10 can be protected with the film 14, and further, the effect of design can be enhanced when a pattern is printed on the film 14. Further, when the film 14 to be bonded to the reinforcement tape 10 is made to have an exfoliate effect, the reinforcement tape 10 can be smoothly pulled out even if no exfoliate tape is bonded to the reinforcement tape 10, whereby the work efficiency is enhanced, and the storability is also enhanced.

When the reinforcement tape 10 fabricated as described above is bonded to the to-be-reinforced base substance 20, the reinforcement tape 10 is bonded along the direction in which the mechanical characteristics of the base substance 20 are desired to be reinforced.

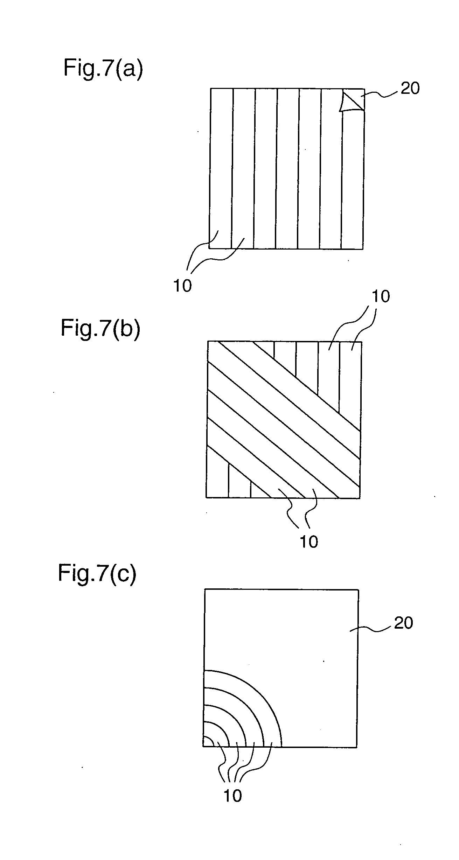

When the orientation of the reinforcement fibers of the reinforcement tape 10 is monoaxial, since the reinforcement tape 10 is thin and lightweight, the mechanical characteristics of the to-be-reinforced base substance 20 can be enhanced without changing the characteristics of the base substance 20 such as the weight and the thickness. Further, since the reinforcement tape 10 is bonded along the direction in which the mechanical characteristics of the to-be-reinforced base substance 20 are desired to be enhanced, the degree of freedom in selecting the direction to be reinforced is increased. For example, the monoaxially oriented reinforcement tapes 10 may be bonded in parallel along one direction as shown in figure 7(a), or the tapes 10 may be bonded overlappingly in different directions as shown in figure 7(b), or the tapes 10 may be bonded not to the entirety of the to-be-reinforced base substance 20 but to only a part of the base substance 20 as shown in figure 7(c). Further, while in figures 7(a) and 7(b) the reinforcement tapes 10 are bonded in parallel with each other, the tapes 10 may be bonded so as to draw curves as shown in figure 7(c).

When performing biaxial reinforcement or planar reinforcement to the to-be-reinforced base substance 20, the above-described monoaxially-orientated reinforcement tape 10 has a problem of taking troubles in bonding. In this case, a tape-shaped material may be fabricated by arranging a plurality of extended and broadened reinforcement fiber string bundles in multiple axes and then impregnating the bundles with the resin 11, and this multiaxial reinforcement tape is bonded to the to-be-reinforced base substance. Thereby, biaxial reinforcement, planar reinforcement, or desired reinforcement can be carried out efficiently and uniformly by only bonding the multiaxial reinforcement tape as it is to the to-be-reinforced base substance. Typical examples of the multiaxial orientation of the reinforcement fiber string bundles include biaxial orientation of 0° /90° , triaxial orientation of 0° /+60° /-60°, and quartaxial orientation of 0° /+45° /-45° /90°. However, the multiaxial orientation is not restricted thereto.

As described above, the thin-layer reinforcement member according to the first embodiment comprises a tape-shaped material which is obtained by impregnating reinforcement fiber string bundles that are extended and broadened to have a width per 1000 strings being 1.3mm or more, with an adhesive resin. Therefore, it is possible to give high mechanical characteristics to the to-be-reinforced base substance without significantly changing the characteristics of the base substance such as the thickness, weight, and flexibility.

Further, since the thin-layer reinforcement member 10 of the present invention has the exfoliate tape 13 bonded to at least one side thereof, the thin-layer reinforcement member 10 can be stored in its rolled-up state. Therefore, the storage is facilitated, and the reinforcement member 10 can be smoothly pulled out when it is bonded to the to-be-reinforced base substance 10, whereby the work efficiency of bonding can be enhanced.

Furthermore, when a previously printed film is bonded to one side of the thin-layer reinforcement member 10, the reinforcement fibers of the reinforcement member 10 can be protected, and the effect of design can be enhanced.

In the above description, the thin-layer reinforcement member is a tape-shaped material. In the actual tape fabrication process, however, in order to enhance the productivity, a reinforcement sheet that is a wide sheet-shaped material having the same construction as described above is fabricated, and the reinforcement sheet is slit in predetermined widths to obtain reinforcement tapes.

### Example 1.

### 1) Fabrication of reinforcement tape

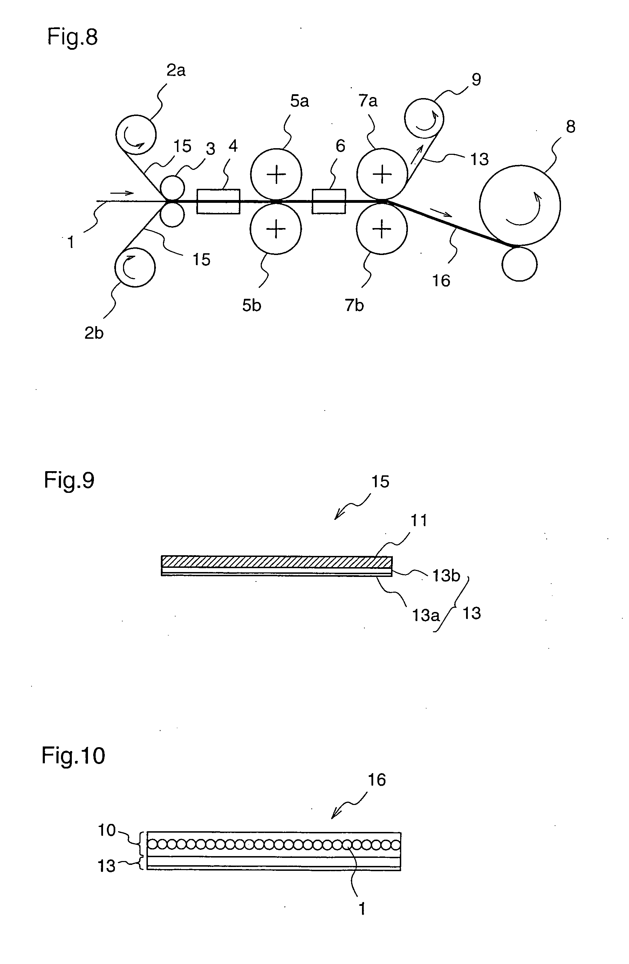

Initially, 12K 300 type Toray carbon fibers are extended and broadened up to a width of 30mm. Then, 30 pieces of the extended and broadened carbon fibers 1 are pulled out and aligned closely but not overlapped, and supplied to a production apparatus shown in figure 8.

Next, exfoliate films 15 supplied from exfoliate film supply units 2a and 2b, on which hot melt resin thin layers (20g/m² for each) are applied, are disposed on both sides of the extended and broadened carbon fibers 1 so that the hot melt resin layers are in contact with the extended and broadened carbon fibers 1. In figure 8, reference numeral 3 denotes a pair of upper and lower rolls, and the carbon fibers 1 and the exfoliate films 15 pass through between these rolls.

Figure 9 is a schematic diagram illustrating a cross section of the exfoliate film 15 on which a resin is applied. In figure 9, reference numeral 13 denotes the exfoliate film, and numeral 11 denotes the hot melt resin layer. The exfoliate film 13 comprises an exfoliate layer (surface) 13a such as a fluorine series resin, and a film 13b on which the exfoliate layer is applied.

Thereafter, the wide tape comprising the exfoliate film, the extended and broadened fibers, and the exfoliate film being arranged in this order is passed through between pressurization rolls 5a and 5b while heating the same with a heater 4, and further, it is passed through between pressurization rolls 7a and 7b while heating the same with a heater 6, to perform pressurization, whereby the supplied carbon fibers are impregnated with the adhesive resin.

The integrated wide tape 16 thus obtained is wound up by a winder 8. At this time, one of the exfoliate tapes 13 bonded to the both sides of the wide tape is wound up by a wind-up roll 9. Figure 10 shows a cross section of the tape obtained at this time.

Thereafter, the tape 16 is cut in predetermined widths to obtain a 300mm-wide monoaxially oriented reinforcement tape with the exfoliate film 13 being bonded on its one side.

### 2) Bonding to to-be-reinforced base substance

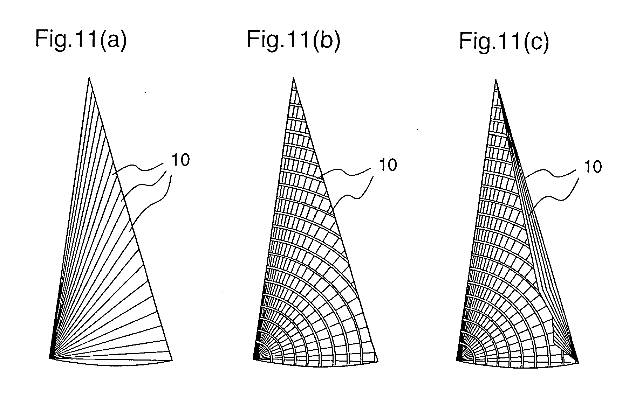

The to-be-reinforced base substance 20 is a 20µm thick biaxial stretching polyester film. This biaxial stretching polyester film is previously cut and shaped into a sail of a sail boat, having a width of about 7~8 meters and a length of about 20 meters. The reinforcement tapes 10 are successively bonded onto the base substance 20 along the direction to be reinforced in the sail as shown in figures 11(a)~11(c) . Then, a mesh-shaped thin fabric is laminated and bonded onto the reinforcement tape 10 that is bonded to the to-be-reinforced base substance 20 as shown in figure 11(c), thereby completing the sail.

The thickness of the sail thus obtained is reduced to about 53% (93µm) relative to the thickness of the conventional sail reinforced by carbon fibers, and the weight of the sail is reduced to about 30% relative to the weight of the conventional sail. Further, when the conventional carbon-fiber-reinforced sail is folded, the carbon fibers are likely to be cut or damaged at the folded portions. In the sail obtained in this first example, however, since the carbon fibers are extended and broadened to be a ultrathin layer, it has flexibility and anti-folding property, whereby the conventional problems are significantly avoided.

### APPLICABILITY in INDUSTRY

A thin-layer reinforcement member of the present invention is useful as a material for reinforcing a thin plate-shaped substance, a sail of a sail boat, a parachute, a substance that is inflated with air, such as various balloons or an airbag, a tent, or a tension structure to be utilized for a roof or a ceiling in architecture.

## Claims

1. A thin-layer reinforcement member which is bonded to a to-be-reinforced base substance to reinforce the mechanical characteristics of the base substance,
said reinforcement member comprising a tape-shaped substance which is obtained by impregnating bundles of reinforcement fiber strings that are extended and broadened so that the width per 1000 strings becomes 1.3mm or more, with an adhesive resin.

2. A thin-layer reinforcement member as defined in Claim 1 wherein said to-be-reinforced base substance is lightweight and thin, and has flexibility.

3. A thin-layer reinforcement member as defined in Claim 2 wherein said to-be-reinforced base substance is a sheet-shaped substance.

4. A thin-layer reinforcement member as defined in any of Claims 1 to 3 wherein said adhesive resin is a hot melt type resin.

5. A thin-layer reinforcement member as defined in any of Claims 1 to 4 wherein an exfoliate tape is bonded to at least one side of the thin-layer reinforcement member.

6. A thin-layer reinforcement member as defined in any of Claims 1 to 4 wherein said reinforcement fibers are carbon fibers.

7. A thin-layer reinforcement member as defined in any of Claims 1 to 4 wherein the layer comprising the reinforcement fiber string bundles has the reinforcement fibers oriented in a monoaxial direction.

8. A thin-layer reinforcement member as defined in Claim 7, said thin-layer reinforcement member being bonded to the to-be-reinforced base substance so that the reinforcement fibers are oriented in one direction.

9. A thin-layer reinforcement member as defined in Claim 7, said thin-layer reinforcement member being overlappingly bonded to the to-be-reinforced base substance so that the reinforcement fibers are oriented in different directions.

10. A thin-layer reinforcement member as defined in any of Claims 1 to 4 wherein a main component of the to-be-reinforced base substance is a biaxial stretching film.

11. A thin-layer reinforcement member as defined in any of Claims 1 to 4 wherein a printed film is bonded to one side of the thin-layer reinforcement member.
